# EUROPÄISCHE PATENTSCHRIFT

(11) **EP 2 795 844 B1**
(45) Veröffentlichungstag und Bekanntmachung des Hinweises auf die Patenterteilung: **16.03.2016**
(21) Anmeldenummer: 12809229.3
(22) Anmeldetag: 14.12.2012
(51) Int. Cl.: H04L 12/28, H04L 27/00, H04B 7/06

(54) **FUNKMODUL FÜR EIN HAUSGERÄT MIT ANPASSBAREM FUNKSTANDARD SOWIE ZUGEHÖRIGES HAUSGERÄT**
RADIO COMMUNICATION MODULE FOR A HOUSEHOLD DEVICE WITH ADAPTABLE COMMUNICATION STANDARD AND A HOUSEHOLD DEVICE COMPRISING THE MODULE
MODULE DE COMMUNICATION RADIO POUR UN APPAREIL D'UTILISATION DOMESTIQUE AVEC UN STANDARD DE COMMUNICATION ADAPTABLE ET UN APPAREIL D'UTILISATION DOMESTIQUE CONTENANT LE MODULE

(30) Priorität: 20.12.2011 DE 102011089105
(43) Veröffentlichungstag der Anmeldung: 29.10.2014
(73) Patentinhaber: BSH Hausgeräte GmbH, 81739 München (DE)
(72) Erfinder: GAUGLER, Johannes, 93073 Neutraubling (DE); KOLBE, Andreas, 12683 Berling (DE); LEITL-NOBEL, Martin, 86465 Welden (DE); RANCK, Sharon, 89407 Dillingen (DE); SIPPEL, Matthias, 83329 Waging am See (DE)
(86) Internationale Anmeldenummer: PCT/EP2012/075608
(87) Internationale Veröffentlichungsnummer: WO 2013/092431

(56) Entgegenhaltungen:
- US-A1- 2009 243 869
- REINHARD BECHER ET AL: "Broad-Band Wireless Access and Future Communication Networks", PROCEEDINGS OF THE IEEE, Bd. 89, Nr. 1, 1. Januar 2001 (2001-01-01) , XP011044465, NEW YORK, US ISSN: 0018-9219
- HISASHI MORISHITA ET AL: "Design Concept of Antennas for Small Mobile Terminals and the Future Perspective", IEEE ANTENNAS AND PROPAGATION MAGAZINE, Bd. 44, Nr. 5, 1. Oktober 2002 (2002-10-01), Seiten 30-43, XP011092601, NJ, US ISSN: 1045-9243

## Beschreibung

Die Erfindung betrifft ein Funkmodul für ein vernetztes Hausgerät, dessen Funkstandard anpassbar ist. Ferner betrifft die Erfindung ein Hausgerät in das das erfindungsgemäße Funkmodul eingebaut ist.

Hausgeräte werden in zunehmendem Maße vernetzt eingesetzt. Es findet also eine Datenübertragung zu bzw. von mindestens einem Hausgerät statt. Damit kann die Bedienung eines Hausgerätes nicht nur am Hausgerät selbst, sondern auch per Fernsteuerung vorgenommen werden, wobei auch Smartphones, neben Handhelds oder in einem Haushalt befindlichen Personalcomputern, für diese Fernsteuerung eingesetzt werden können. Ferner steht es auch oft an, die Hausgeräte eines Haushaltes untereinander zu vernetzen und dabei übergeordnet ein Hausgeräte-Energie-Management-System bzw. HEMS einzusetzen, um günstige Abrechnungsbedingungen für die in einem Haushalt zu betreibenden Hausgeräte zu erhalten, ohne dass die Betriebswünsche, die eine Bedienungsperson an das eine oder andere Hausgerät hat, zu sehr eingeschränkt werden müssen. Insbesondere bei Einsatz eines HEMS werden auch übergeordnete Informationen, zum Beispiel stammend von einem Energieversorgungsunternehmen über meist günstige Stromtarife, berücksichtigt. Es ist auch möglich, dass Informationen, die eine Bedeutung für den Betrieb von Hausgeräten haben, über ein Kommunikationsunternehmen, zum Beispiel für das HEMS oder unmittelbar für die Hausgeräte, die meist an sich schon mit einer intelligenten Steuerung versehen sind, angeboten werden.

Für die Vernetzung der Hausgeräte stehen drahtgebundene und drahtlose Übertragungsstandards zur Verfügung. Drahtgebundene Übertragungen, wie Ethernet oder PLC (Powerline Communication) werden jedoch meist durch drahtlose Übertragungen bzw. Funkübertragungen für die letzte Strecke bis zu einem Hausgerät ergänzt. In einem solchen Fall kommt der drahtgebundenen Übertragungstechnik meist die Funktion einer Überbrückung zu, da Funkstandards in genehmigungsfreien Frequenzbändern meist nur über kurze Strecken in einem Gebäude, meist nur in einem Stockwerk, aber nicht über mehrere Stockwerke mit Betondecken hinweg, wirksam sind.

Der funktechnischen Vernetzung eines Hausgerätes kommt daher eine sehr hohe Bedeutung zu, zumal nicht auszuschließen ist, dass eine drahtgebundene Überbrückung, bei der Vernetzung eines Hausgerätes nur bei Bedarf eingesetzt wird, wenn die funktechnische Übertragung, z. B. von bzw. zu einem HEMS, als nicht mehr realisierbar erkannt wurde. Im Resümee kommt also einem drahtlosen Empfang von Daten für ein Hausgerät bzw. dem Senden von Daten von einem Hausgerät, beispielsweise von Daten, gesendet und empfangen von einem HEMS, erhebliche Bedeutung zu. Im Sinne der Erfindung ist somit ein Funkmodul für ein einzelnes Hausgerät für einen Empfangs- und Sendebetrieb, beispielsweise auch im Vollduplex- Betrieb, angesprochen.
Es wird angegeben, dass es an sich bekannt ist, eine Sende- bzw. Empfangs- Einrichtung so aufzubauen, dass im Wesentlichen eine rechnende Schaltungsanordnung eingesetzt wird, um ein Höchstmaß an unterschiedlicher Einsetzbarkeit zu erreichen. Unterschiedliche Funkverfahren können durch alleinige Änderung von Software, die in den Speicher der rechnenden Schaltungsanordnung ladbar ist, verwirklicht werden. Diese Ausbildung ist auch unter dem Kürzel SDR, stehend für "Software Defined Radio", geläufig. Als Anwendungsbereich für SDR ist der Bereich des Amateurfunks, des Militärs sowie des Mobilfunks bekannt.

Ferner geht ein System für ein Energiemanagement von Hausgeräten bzw. HEMS aus der US 2011/0153109 A1 hervor. Damit werden Hausgeräte und andere Verbraucher so gesteuert, dass in Spitzenlastzeiten der Verbrauch an elektrischer Energie reduziert ist. Es soll vermieden werden, nur von den speziellen Vorgaben eines Elektrizitätsversorgungsunternehmens abhängig zu sein. Dafür soll es möglich sein, dass der Benutzer des HEMS das Belastungsprofil, das durch die Gesamtheit der Geräte auslösbar ist, selbst bestimmt. Die Ansteuerung der einzelnen Hausgeräte erfolgt drahtlos mit ZigBee, Wi-Fi oder Frequenzmodulation im Bereich von Radiofrequenzen. Ein für ein einzelnes Hausgerät vorgesehener Funkstandard ist jedoch nicht anpassbar.

Des Weiteren wird in der DE 20 2009 013 003 U1 ein Zusammenwirken eines drahtlosen Netzwerkes bzw. eines Funknetzwerkes und eines drahtgebundenen Netzwerkes, das über Gebäudestromleitungen den Datenaustausch vornimmt, beschrieben. Mit dem drahtlosen Netzwerk werden die Clients bzw. Geräte angesteuert. Es werden geeignete Vorkehrungen getroffen, um durch Einsatz eines Speichers bzw. einer Datenbank den Datenaustausch zwischen beiden Netzen ausführen zu können. Das drahtgebundene Netzwerk ist bezüglich seiner Reichweite auf diejenige des Gebäudestromnetzes ausgerichtet. Die dabei zum Einsatz gelangenden Funknetze werden nicht für verschiedene Standards vorgesehen.

In der US 2009/0243869 A1 ist ein System für die Kommunikation betreffend Energiebezogener Daten zwischen einem entfernt von einem Haushalt befindlichen Versorgungsunternehmen und einer Vielzahl von Geräten in dem Haushalt offenbart. Innerhalb des Haushaltes existiert mindestens ein lokales Funk-Netz WLAN und zum Versorgungsunternehmen hin existiert ein für große Entfernungen ausgelegtes Netz WAN. Die Verknüpfung der Netze WAN und WLAN erfolgt über ein haushaltsbezogenes Gateway, das ein für verschiedene Frequenzbänder und verschiedene Protokolle vorgesehenes Software Defined Radio aufweist. Die Geräte in dem Haushalt können die Datenkommunikation mit dem Gateway unter Benutzung verschiedener Funk- Protokolle vornehmen. Die Geräte des Haushaltes dieser US 2009/0243869 A1 weisen jedoch kein Software Defined Radio auf.

Unter Berücksichtigung des vor Allem einleitend erörterten Standes der Technik erweist sich die drahtlose Übertragung bzw. die Funkübertragung mindestens für die letzte Strecke bis zu einem Hausgerät als besonders wichtig, wobei nicht generell damit gerechnet werden kann, dass ein Haushalts- bezogenes Gateway zur Verfügung steht, das für den Funkstandard eines jeweiligen Hausgerätes anpassbar ist. Es muss eher damit gerechnet werden, dass ein Funkstandard für ein lokales Hausnetz WLAN aus Sicht eines einzelnen Hausgerätes als bindend zu berücksichtigen anzusehen ist, wobei auch aktuell und insbesondere in der Zukunft von unterschiedlichen Funkstandards auszugehen ist.

Die Aufgabe der Erfindung besteht daher darin, ein Funkmodul für ein vernetzungsfähiges Hausgerät anzugeben, das sich auf einfache Weise, auch bei bereits erfolgtem Einbau in ein dafür bestimmtes Hausgerät, an einen anderen Funkstandard anpassen lässt. Es soll ferner berücksichtigt werden, dass die Qualität und die Sicherheit der Übertragung von Daten zu und von dem Funkmodul in hohem Maße gegeben ist.

Ferner gehört zur Erfindung ein Hausgerät mit einem solchen Funkmodul.

Die Erfindung wird durch die Gesamtheit der im unabhängigen Patentanspruch angegebenen und auf ein Funkmodul gerichteten Merkmale gelöst und durch die auf diesen Patentanspruch rückbezogenen, abhängigen Patentansprüche weitergebildet.

Ferner gehört zur Erfindung ein Hausgerät, das das erfindungsgemäße Funkmodul aufweist.

Die Lösung der erfindungsgemäßen Aufgabe besteht also darin, dass ein Funkmodul für ein vernetztes Hausgerät vorgesehen ist, dass dessen Funkstandard anpassbar ist, wobei weiter vorgesehen ist, dass zum Erreichen verschiedener Frequenzbänder, verschiedener Modulationsverfahren, verschiedener Verschlüsselungen und dgl., das Funkmodul einen digitalen Signalverarbeitungsblock auf Basis eines frei programmierbaren Rechners sowie einen analoger Signalverarbeitungsblock zur Ansteuerung mindestens einer Sende- und Empfangsantenne aufweist, wobei der Block zur Ansteuerung mindestens einer Antenne ferner so ausgebildet ist, dass eine aktive Antennenanpassung an die örtlichen Begebenheiten durchführbar ist und wobei eine Kopplung des digitalen Signalverarbeitungsblockes mit dem analogen Signalverarbeitungsblock durch einen Wandlerblock mit Digital-Analog- bzw. Analog-Digital-Wandlung erfolgt. Indem eine Programmierung des frei programmierbaren Rechners auch nach dem Einbau des Funkmoduls in das betreffende Hausgerät vorgesehen ist, kann dessen Funkstandard auch noch nachträglich verändert werden.

Für das erfindungsgemäße Funkmodul ist es zu bevorzugen, wenn dessen technische Eigenschaften, wie der bestimmungsgemäße Betrieb mit einem bestimmten Frequenzband, einem entsprechenden Modulationsverfahren, einer entsprechenden Verschlüsselung und dgl. durch Einspeicherung von Daten, die insgesamt ein technisches Ablaufprogramm ergeben, in einen Speicher des digitalen Signalverarbeitungsblocks erfolgt. Für das technische Ablaufprogramm kann auch der Begriff Software bzw. Technische Software verwendet werden.

Als Frequenzbänder mit entsprechenden Toleranzen bezüglich der angegebenen Frequenz sind vorzugsweise vorgesehen: 315 MHz, 433 MHz, 780 MHz, 868 MHz, 915 MHz, 2,4 GHz.

Als Modulationsverfahren sind vorzugsweise die folgenden Modulationsverfahren vorgesehen: AM, BPSK, DSSS, FHSS, FM, FSK, OFDM, QPSK. In dem Beschreibungsteil anhand der Figuren werden noch die zu den Kurzbezeichnungen gehörenden deutschsprachigen bzw. englischsprachigen Begriffe angegeben.

Als Verschlüsselungen sind vorzugsweise die folgenden Verschlüsselungsverfahren vorgesehen: AES, DES, 3DES, WEP, WPA, WPA 2. In dem nachfolgenden Beschreibungsteil mit Bezugnahme auf die beigefügte Zeichnung werden noch die zu den Kurzbezeichnungen gehörenden deutschsprachigen bzw. englischsprachigen Begriffe angegeben.

Es ist vorzugsweise auch vorgesehen, dass das Funkmodul für das Vorliegen eines Funknetzes ausgebildet werden kann, das dem, hohen Datenübertragungsraten gerecht werdenden, (Mobilfunk-) Standard LTE (Long Term Evolution) entspricht, wobei ein Frequenzband von 700 MHz bis 2,7 GHz eingesetzt wird. In einem Haushalt kann ein privates virtuelles Netzwerk, abgekürzt VPN, berücksichtigt werden.

Ferner ist es vorteilhaft, wenn das Funkmodul für das Vorliegen eines Funknetzes ausgebildet ist, das dem Standard Bluetooth, W-LAN (IEEE 802.11 b/g/n), LTE, ZigBee oder Z-Wave entspricht, sowie dass vorgesehen ist, dass zwischen diesen Standards umgeschaltet werden kann.

Wird vorgesehen, dass die Verschlüsselung einzelner Kanäle mittels SSH (Secure Shell), SSL (Secure Sockets Layer), VPN oder IPSec (Protokoll als ein Layer-3-Tunneling Protokoll) vorgenommen wird, kann es möglich werden, dass eine Prozessorlast verringert wird.

Um eine aktive Antennenanpassung an die örtlichen Begebenheiten erreichen zu können, ist vorzugsweise vorgesehen, dass eine Ansteuerung einer Mehrfachanordnung von Antennen über aktive Anpassungsglieder erfolgt. Dafür ist es weiter vorteilhaft, wenn eine aktive Antennenanpassung durch elektrische Anpassungsglieder und analoge, adaptive Filter erfolgt.

Um im praktischen Einsatz eine spürbare Erleichterung bezüglich einer in einem Haushalt vorliegenden Funktechnologie zu bekommen, ist es besonders günstig, wenn die Auslegung des Funkmoduls so erfolgt, dass die richtige Funktechnologie des Funknetzwerkes des Haushaltes, in dem sich das Hausgerät mit dem Funkmodul befindet, automatisch erkannt wird.

Ebenso ist es vorteilhaft, wenn die Auslegung des Funkmoduls so erfolgt, dass ein Kanal mit geringer Kanalbelegung aufgefunden werden kann und ein Wechsel auf einen solchen Kanal ausgelöst werden kann.

Bei der Herstellung eines Hausgerätes, in das das erfindungsgemäße Funkmodul eingebaut wird, wird es bevorzugt, dass das Funkmodul erst nach dessen Einbau in das betreffende Hausgerät programmiert wird bzw. die hierfür erforderliche Software geladen wird, wozu eine berührungslose Programmierung vorgesehen ist. Dafür kann eine eigenständige Nahfeldkommunikation herangezogen werden, die sicherheitsrelevante Gesichtspunkte mit berücksichtigt.

Soweit die Erfindung durch auf die unabhängigen Ansprüche rückbezogene, nicht selbständige Ansprüche weitergebildet wird, so soll es so sein, dass eine zunächst angegebene Kette von Rückbeziehungen nicht einschränkend in Bezug auf die insgesamt mitgeteilte Lehre zu sehen ist, soweit auch andere Kombinationen von Merkmalen von Ansprüchen sich als geeignet und ausführbar aus Sicht des Fachmanns ergeben.

Im Folgenden wird die Erfindung anhand von Ausführungsbeispielen schematisch genauer beschrieben, wobei die Ausführungsbeispiele in der beigefügten Zeichnung dargstellt sind und nachfolgend erläutert werden. Gleiche Bezugszeichen zeigen gleiche oder vergleichbare Teile. Die Figuren der Zeichnung werden zunächst kurz erläutert:
Fig. 1 zeigt grundsätzlich, wie ein Hausgerät über ein Funknetzwerk für einen Datenaustausch ausgelegt ist, wobei im Figurenteil A eine anschauliche Darstellung mit einer fallweise eingesetzten PLC-Reichweitenverlängerung dargestellt ist und im Figurenteil B von der Steuerung des Hausgerätes ein Funkmodul mit grundlegenden Signalverarbeitungsblöcken samt der Antennenanordnung gezeigt ist.
Fig. 2 zeigt in Blockschaltbilddarstellung das Funkmodul in weiteren Einzelheiten, und
Fig. 3 zeigt ebenfalls in Blockschaltbilddarstellung eine aktive Ansteuerung einer einzelnen Antenne der zugrunde gelegten Antennenanordnung.

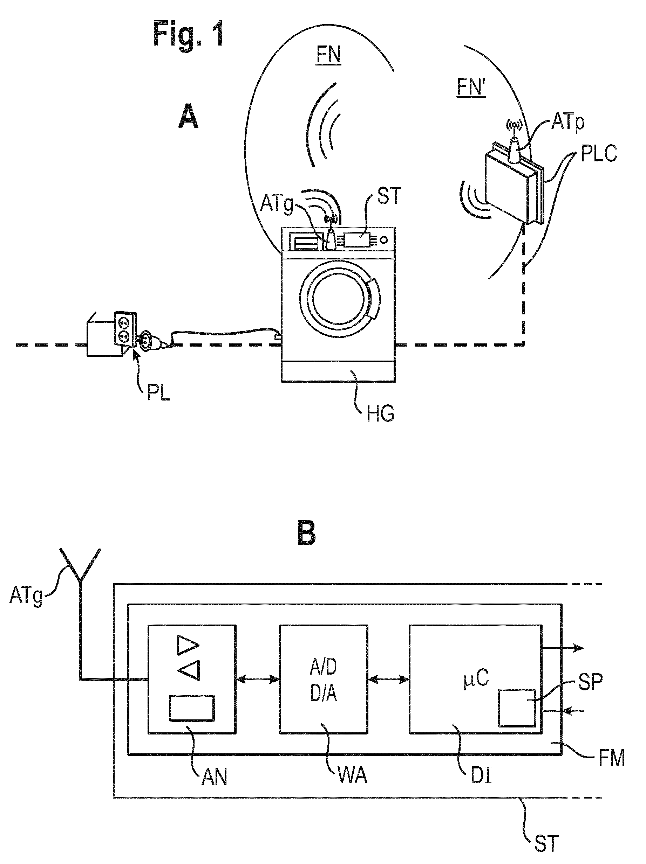

Ein Hausgerät HG ist im Figurenteil A der Fig. 1 anschaulich dargestellt, wie beispielsweise eine Waschmaschine. Dieses Hausgerät HG kann in bekannter Weise durch Eingaben einer Bedienungsperson in Betrieb genommen werden. Stattdessen kann auch über empfangene Daten eines um das Hausgerät existierenden Funknetzes FN über eine Fernsteuerung, ein Smartphone, ein Handheld, einen Personalcomputer eine Bedienung des Hausgerätes erfolgen. Ferner können auch zusätzliche Daten eines Energie-Management-Systems (Kurzform HEMS) an das Hausgerät und von diesem zurück übertragen werden. Das Hausgerät HG ist daher mit einer Antennenanordnung ATg versehen, die insbesondere mehrere Antennen umfassen kann. Es liegt daher meist eine gesamte Antennenanordnung vor. Das Funknetz FN kann sich innerhalb eines Haushaltes befinden, wobei zunächst davon ausgegangen wird, dass der Datenaustausch mit anderen Teilnehmern des Funknetzes, wie zum Beispiel dem HEMS, ohne Schwierigkeiten möglich ist. Sollte sich ein Haushalt über mehrere Stockwerke erstrecken, so ist es möglich, dass die Funkverbindung zu einem bestimmten Hausgerät, wie einer Waschmaschine in einem Untergeschossraum, nicht mehr möglich ist. Es muss eine Reichweitenverlängerung des Funknetzes über Relaisstationen (Repeater) oder über ein Versorgungsnetz, also über eine Powerline-Überbrückung PL, erfolgen. Damit wird im Bereich des betreffenden Hausgerätes wiederum ein Funknetz FN' bereitgestellt, das von der Antenne ATp bzw. einem Access-Point der PLC Reichweiten-Verlängerung bereitgestellt wird. Es ist also wichtig, dass das Hausgerät HG für eine, anspruchsvollen Vorgaben genügende, Funkverbindung ausgestattet ist bzw. dafür erleichtert anpassbar ist, da Funkstandards einem Wechsel unterliegen können. Das Hausgerät HG weist daher in dessen Steuerung ST ein Funkmodul FM (vgl. auch Fig. 1 B) auf, das mit der bereits beschriebenen Antennenanordnung ATg verbunden ist. Ferner sind Verbindungen (ohne Bezugszeichen) von dem Funkmodul FM zu anderen Teilbereichen der Steuerung ST vorgesehen, damit auch der Datenaustausch über das Funknetz FN bestimmungsgemäß zu der eigentlichen Steuerung des Hausgerätes vorgenommen werden kann.

Mit dem Figurenteil B von Fig. 1 wird ferner noch in genauerer Weise dargestellt, wie das Funkmodul FM von der Steuerung des Hausgerätes HG umfasst ist. Das Funkmodul FM weist einen digitalen Signalverarbeitungsblock DI und einen analogen Signalverarbeitungsblock AN auf, die über einen Wandlerblock WA miteinander verbunden sind. Im Wandlerblock findet eine D/A Umsetzung und eine A/D Umsetzung von und zu dem analogen Signalverarbeitungsblock statt. Der Analoge Signalverarbeitungsblock AN ist im Wesentlichen dafür ausgelegt, eine Sendefunktion über die mit diesem verbundene Antenne bzw. Antennenanordnung ATg vornehmen zu können. Andererseits wird über die Antennenanordnung ATg in Verbindung mit dem Signalverarbeitungsblock AN eine Empfangsfunktion ausgeübt. Dazu weist der Verarbeitungsblock AN geeignete Verstärkerschaltungen und weitere, insbesondere auch aktive Antennenanpassungsschaltungen auf, die nachfolgend noch weiter hervorgehoben werden sollen. Der digitale Signalverarbeitungsblock wird im Allgemeinen durch eine rechnende Schaltungsanordnung bzw. einem Universalrechner gebildet, dessen Funktionen aufgrund von in einem Speicher SP aufgenommen Ablaufprogrammen durchgeführt werden. Um neue bzw. aktualisierte Programme laden zu können, muss die Art des Speichers so gewählt werden, dass dessen Speicherzellen neue Inhalte aufnehmen können, ohne dass bei einer Abschaltung einer Stromversorgung die Speicherinhalte verloren gehen. Die erwähnten Ablaufprogramme werden auch als Software bezeichnet, die bei einer Aktualisierung in den Speicher geladen werden kann. Mit dem Ablaufprogramm bzw. mit entsprechender, geladener Software kann das gesamte Verhalten des Funkmoduls FM bestimmt werden. Eine gegenüber dem erfindungsgemäßen Funkmodul vereinfachte Ausführungsform wird als Software Defined Radio bzw. SDR bezeichnet und wird üblicherweise für einen sprachbasierten Nachrichtenaustausch eingesetzt, beispielsweise im Bereich des Amateurfunks, wenn es wichtig ist mit demselben Gerät bzw. SDR verschiedene Frequenzbänder nutzen zu können.

Das Funkmodul wird über entsprechende Software für das Senden und Empfangen in verschiedenen Frequenzbändern vorgesehen, nämlich (mit einem zulässigen Toleranzbereich): 315 MHz, 433 MHz, 780 MHz, 868 MHz, 915 MHz, 2,4 GHz. Ferner ist vorgesehen, dass über entsprechende Software verschiedene Modulationsverfahren, wie: AM (Amplitudenumtastung), BPSK (Phasenumtastung), DSSS (Direct Sequence Spread Spectrum), FHSS (Frequency Hopping Spread Spectrum), FM (Frequenzmodulation), FSK (Frequenzumtastung), OFDM (Orthogonal Frequency-Division Multiplexing), QPSK (Quadraturphasenumtastung) zu realisieren. Des Weiteren ist vorgesehen, dass verschiedene Verschlüsselungen, wie AES (Advanced Encryption Standard), DES (Data Encryption Standard), 3DES (Triple-DES), WEP (Wired Equivalent Privacy), WPA (Wi-Fi Protected Access), WPA 2 (Wi-Fi Protected Access 2) zu implementieren.

In einer Alternative ist vorgesehen, den Mobilfunkstandard LTE (Long Term Evolution) bzw. LTE/4G, insbesondere als VPN (Virtual Privat Network), zu berücksichtigen, so dass das Funkmodul einen Empfangs- bzw. Sendebereich dieses Standards aufweist. LTE wird im Frequenzband von 700 MHz bis 2,7 GHz eingesetzt. Es wird dabei ferner berücksichtigt, dass LTE ähnlich wie WiFi als WLAN Standard IEEE 802.11n mit skalierbaren und individuellen OFDM-Kanälen (Kanäle für Orthogonales Frequenzmultiplexverfahren) und mehreren Antennen- und Signalverarbeitungseinheiten bzw. MIMO (Multiple Input Multiple Output) betreibbar ist. Per Software kann dann zwischen Bluetooth, WLAN (IEEE 802.11 b/g/n), LTE, ZigBee oder Z-Wave umgeschaltet werden.

Weiterhin ist es zu bevorzugen, eine parallele Nutzung von Funkkanälen vorzusehen. Ein Funkstandard, der sich geändert hat, kann, was nochmals zur Klarstellung hervorgehoben wird, per Software-Update in den Speicher des digitalen Signalverarbeitungsblocks DI des Funkmoduls FM geladen werden.

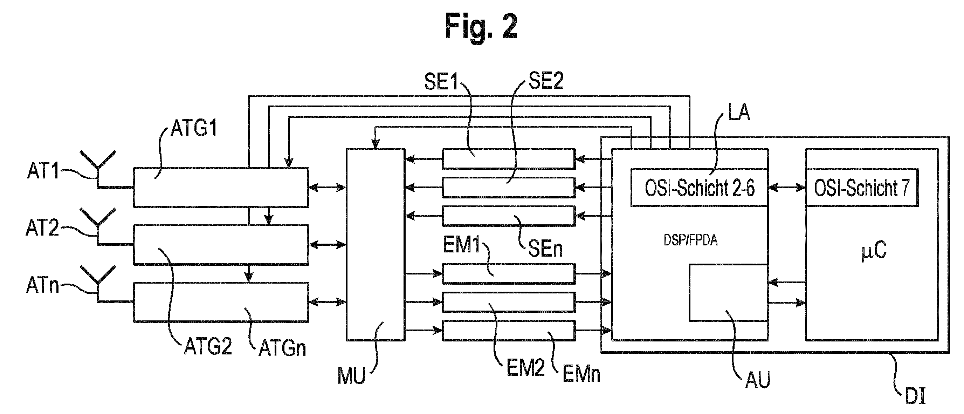

Unter Bezugnahme auf Fig. 2 wird darauf verwiesen, dass im digitalen Signalverarbeitungsblock DI bzw. in dem Rechner, wie einem Mikroprozessor µC, die Abarbeitung einer Layer LA bis einschließlich Layer 6 des OSI-Schichtenmodells erfolgt. Außerdem erfolgt die rechenintensive Authentifizierung AU von Nachrichten ebenfalls im Rechner, zugehörig zu dem digitalen Signalverarbeitungsblock.

Zur Ausgestaltung eines Antennenmultiplexers wird vorgesehen, dass zwischen einem Matrix-Multiplexer MU und dem digitalen Signalverarbeitungsblock DI Sendepfade SE1, SE2, ...SEn und Empfangspfade EM1, EM2, ... EMn vorgesehen sind. Eine Mehrfach-Antennenanordnung mit Antennen AT1, AT2, ... ATn sieht die Ansteuerung der benannten Antennen mit aktiven Antennenanpassungsgliedern ATG1, ATG2, ... ATGn vor. Damit wird die Voraussetzung dafür geschaffen, dass eine Mehrfach-Ansteuerung MIMO (Multiple Input Multiple Output) sowie ein Beamforming als auch eine Antennendiversität geschaffen werden kann.

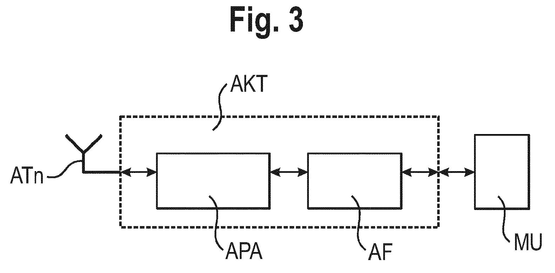

Unter Bezugnahme auf Fig. 3 wird erläutert, dass die Funktionsweise von breitbandigen Antennen durch aktive Antennenanpassung AKT erfolgen kann. Im Block AKT sind elektrische Anpassungsglieder APA und analoge adaptive Filter AF vorgesehen. Die elektrischen Anpassungsglieder APA werden bevorzugt als aktive Anpassungsglieder bzw. Varaktoren mit elektrisch abstimmbaren reaktiven Widerständen ausgebildet.

Das Funkmodul ist auch für eine Antennenanpassung an die örtlichen Begebenheiten ausgelegt. Dazu wird ein Suchmodus ausgelöst, indem während der Kommunikation die jeweilige Antenne geringfügig verstimmt wird und die Signalqualität nach der Verstimmung ausgewertet wird. Mittels eines Reinforcement Learning-Algorithmus kann so die jeweilige Antenne optimal an die Umgebung angepasst werden.

Nach einer besonders vorteilhaften Ausgestaltung des Funkmoduls FM ist es möglich, dass die richtige Funktechnologie des Funknetzwerkes FN des betreffenden Haushaltes in dem das Hausgerät HG mit dem Funkmodul FM befindlich ist, automatisch erkannt wird und danach durch Auswahl der richtigen Software für die weitere Funktion des Funkmoduls, als Firmware, zugrunde gelegt wird. Es kann dabei eine "Blind Modulation und Radio Technology Detection"-Technologie zum Einsatz gelangen.

Nach einer weiteren, vorteilhaften Ausgestaltung wird vorgesehen, dass im Hintergrund immer nach einem Kanal mit geringer Kanalbelegung gesucht wird und bei Vorliegen eines solchen Kanals mit geringer Belegung ein Kanalwechsel vorgeschlagen bzw. ausgelöst wird.

Ein Algorithmus, der ein solches Aussuchen eines Kanals mit geringer Belegung ermöglicht, kann beispielsweise auch mit einer dafür konzipierten Software, die in den Speicher SP des digitalen Signalverarbeitungsblocks DI geladen wird, erfolgen.

Ein Hausgerät, das mit einem solchen Funkmodul ausgerüstet ist, weist besondere Vorteile in Bezug auf dessen gesamten Lebens-Zyklus aus. Am Ende der Fertigung, also zusammenfallend mit der Fertigungs-Endprüfung des Hausgerätes, ist es möglich, eine berührungslose Programmierung, insbesondere in Bezug auf das Funkmodul FM vorzunehmen. Diese berührungslose Programmierung wird auch als proprietäre Nahfeldkommunikation (Near Field Communication - NFC) bezeichnet. Das Hausgerät erhält dann auch alle Bezeichnungsschilder für die Lagerhaltung. Nach dem Verkauf bzw. der Installation des Hausgerätes beim Kunden kann bei Berücksichtigung der Funktionalität des erfindungsgemäßen Funkmoduls eine Kommunikation mit einem Funknetz nach einem Standard wie Bluetooth, WiFi, LTE, ZigBee oder Z-Wave erfolgen. Die proprietäre Nahfeldkommunikation NFC erweist sich dann insofern als vorteilhaft, dass nur der Hersteller oder der Kundendienst auf einfachem Wege eine Möglichkeit hat, die Software, die in den Speicher des Funkmoduls zu laden ist, einer Veränderung zu unterziehen. Somit liegt auch ein nicht unbeachtliches Sicherheitsmerkmal vor.

### Bezugszeichenliste

- HG: Hausgerät
- FN: Funknetz, auch FN'
- FM: Funkmodul
- ATg: Antennenanordnung des Hausgerätes, gesamt
- PL: Powerline für Überbrückung
- PLC: Reichweitenverlängerung durch PL
- ATp: Antenne von FN' bzw. Access Point
- ST: Steuerung Hausgerät
- DI: digitaler Signalverarbeitungsblock
- SP: Speicher
- AN: analoger Signalverarbeitungsblock
- WA: Wandlerblock
- µC: Mikroprozessor
- AU: Authentifizierung
- LA: Schicht von Schichtenmodell
- MU: Matrix Multiplexer
- SE1,2,n: Sendepfad 1, 2, n
- EM1,2,n: Empfangspfad 1, 2, n
- AT1,2,n: Antenne 1, 2, n von ATg
- ATG1,2: aktives Antennenanpassglied 1,2
- ATGn: aktives Antennenanpassglied n
- AKT: aktive Antennenanpassung
- APA: elektrische Anpassungsglieder
- AF: analoge, adaptive Filter
- SDR: Software Defined Radio

## Patentansprüche

1. Funkmodul für ein vernetztes Hausgerät, dessen Funkstandard anpassbar ist, wobei vorgesehen ist, dass zum Erreichen verschiedener Frequenzbänder, verschiedener Modulationsverfahren, sowie verschiedener Verschlüsselungen, das Funkmodul (FM) einen digitalen Signalverarbeitungsblock (DI) auf Basis eines frei programmierbaren Rechners sowie einen analogen Signalverarbeitungsblock (AN) zur Ansteuerung mindestens einer Sende- und Empfangsantenne (AT1, AT2, ... ATn) aufweist, wobei der Block (AN) zur Ansteuerung mindestens einer Sende- und Empfangsantenne (AT1, AT2, ... ATn) ferner so ausgebildet ist, dass eine aktive Antennenanpassung an die örtlichen Begebenheiten durchführbar ist und wobei eine Kopplung des digitalen Signalverarbeitungsblockes mit dem analogen Signalverarbeitungsblock durch einen Wandlerblock (WA) mit Digital-Analog bzw. Analog-Digitalwandlung erfolgt.

2. Funkmodul nach Anspruch 1, **dadurch gekennzeichnet, dass** dessen technische Eigenschaften, wie der bestimmungsgemäße Betrieb mit einem bestimmten Frequenzband, einem entsprechenden Modulationsverfahren, einer entsprechenden Verschlüsselung durch Einspeicherung von Daten, die insgesamt ein technisches Ablaufprogramm ergeben, in einen Speicher (SP) des digitalen Signalverarbeitungsblocks (DI) erfolgt.

3. Funkmodul nach einem der vorhergehenden Ansprüche, **dadurch gekennzeichnet, dass** als Frequenzbänder mit entsprechenden Toleranzen bezüglich der angegebenen Frequenz vorgesehen sind: 315 MHz, 433 MHz, 780 MHz, 868 MHz, 915 MHz, 2,4 GHz.

4. Funkmodul nach einem der vorhergehenden Ansprüche, **dadurch gekennzeichnet, dass** als Modulationsverfahren die folgenden Modulationsverfahren vorgesehen sind: AM, BPSK, DSSS, FHSS, FM, FSK, OFDM, QPSK.

5. Funkmodul nach einem der vorhergehenden Ansprüche, **dadurch gekennzeichnet, dass** als Verschlüsselungen die folgenden Verschlüsselungsverfahren vorgesehen sind: AES, DES, 3DES, WEP, WPA, WPA 2.

6. Funkmodul nach einem der vorhergehenden Ansprüche, **dadurch gekennzeichnet, dass** das Funkmodul (FM) für das Vorliegen eines Funknetzes (FN) ausgebildet ist, das dem Standard Long Term Evolution, kurz LTE, entspricht.

7. Funkmodul nach einem der Ansprüche 1 bis 5, **dadurch gekennzeichnet, dass** das Funkmodul (FM) für das Vorliegen eines Funknetzes ausgebildet ist, das dem Standard Bluetooth, W-LAN nach IEEE 802.11 b/g/n, LTE, ZigBee oder Z-Wave entspricht, sowie dass vorsehbar ist, dass zwischen diesen Standards eine Umschaltbarkeit vorliegt.

8. Funkmodul nach einem der vorhergehenden Ansprüche, dass zusätzlich die Verschlüsselung einzelner Kanäle mittels SSH, SSL, VPN oder IPSec vorgenommen wird.

9. Funkmodul nach einem der vorhergehenden Ansprüche, **dadurch gekennzeichnet, dass** zu einer Ansteuerung einer Mehrfachanordnung von Antennen (AT1, AT2, ... ATn) aktive Anpassungsglieder (ATG1, ATG2, ... ATGn) vorgesehen sind.

10. Funkmodul nach Anspruch 9, **dadurch gekennzeichnet, dass** eine aktive Antennenanpassung (AKT) durch elektrische Anpassungsglieder (APA) und analoge, adaptive Filter (AF) erfolgt.

11. Funkmodul nach einem der vorhergehenden Ansprüche, **dadurch gekennzeichnet, dass** dessen Auslegung so erfolgt, dass die richtige Funktechnologie des Funknetzwerkes des Haushaltes in dem sich das Hausgerät (HG) mit dem Funkmodul (FM) befindet, automatisch erkannt wird.

12. Funkmodul nach einem der vorhergehenden Ansprüche, **dadurch gekennzeichnet, dass** dessen Auslegung so erfolgt, dass ein Kanal mit geringer Kanalbelegung auffindbar ist und ein Wechsel auf einen solchen Kanal auslösbar ist.

13. Funkmodul nach einem der vorhergehenden Ansprüche, **dadurch gekennzeichnet, dass** dessen Auslegung so erfolgt, dass nach dessen Einbau in das betreffende Hausgerät (HG) eine berührungslose Programmierung ermöglichbar ist.

14. Funkmodul nach Anspruch 13, **dadurch gekennzeichnet, dass** eine berührungslose Programmierung als Sicherheits- relevante, proprietäre Nahfeldkommunikation ausbildbar ist.

15. Hausgerät, **dadurch gekennzeichnet, dass** es ein Funkmodul (FM) nach einem der Ansprüche 1 bis 14 aufweist.

## Claims

1. Radio communication module for a networked domestic appliance, the communication standard of which can be adjusted, wherein provision is made for the radio communication module (FM) to have a digital signal processing block (DI) based on a freely programmable computer and an analogue signal processing block (AN) to activate at least one transmit and receive antenna (AT1, AT2, ..., ATn) in order to achieve different frequency bands, different modulation methods and different encryptions, wherein the block (AN) is further embodied to activate at least one transmit and receive antenna (AT1, AT2,...ATn) such that an active antenna adjustment to the local occurrences can be performed and wherein a coupling of the digital signal processing block to the analogue signal processing block takes place by means of a converter block (WA) with digital-analogue or analogue-digital conversion.

2. Radio communication module according to claim 1, **characterised in that** its technical properties, such as the conventional operation with a certain frequency band, a corresponding modulation method, a corresponding encryption by storing data, which overall produces a technical sequence program, takes place in a memory (SP) of the digital signal processing block (DI).

3. Radio communication module according to one of the preceding claims, **characterised in that** 315 MHz, 433 MHz, 780 MHz, 868 MHz, 915 MHz, 2.4 GHz are provided as frequency bands with corresponding tolerances in respect of the specified frequency.

4. Radio communication module according to one of the preceding claims, **characterised in that** the following modulation methods are provided as modulation methods: AM, BPSK, DSSS, FHSS, FM, FSK, OFDM, QPSK.

5. Radio communication module according to one of the preceding claims, **characterised in that** the following encryption methods are provided as encryptions: AES, DES, 3DES, WEP, WPA, WPA2.

6. Radio communication module according to one of the preceding claims, **characterised in that** the radio communication module (FM) is embodied for the presence of a radio communication network (FN), which corresponds to the Long Term Evolution, LTE, standard.

7. Radio communication module according to one of claims 1 to 5, **characterised in that** the radio communication module (FM) is embodied for the presence of a radio communication network, which corresponds to the Bluetooth, W-LAN according to IEEE 802.11 b/g/n, LTE, ZigBee or Z-Wave standard, and provision can be made to be able to switch between these standards.

8. Radio communication module according to one of the preceding claims, **characterised in that** the encryption of individual channels is also performed by means of SSH, SSL, VPN or IP Sec.

9. Radio communication module according to one of the preceding claims, **characterised in that** active adjustment elements (ATG1, ATG2, ... ATGn) are provided to activate a multiple arrangement of antennae (AT1, AT2,... ATn).

10. Radio communication module according to claim 9, **characterised in that** an active antenna adjustment (AKT) takes place by means of an electrical adjustment element (APA) and an analogue, adaptive filter (AF).

11. Radio communication module according to one of the preceding claims, **characterised in that** its design takes place such that the correct communication technology of the radio communication network of the domestic appliance in which the domestic appliance (HG) with the radio module (FM) is located is automatically identified.

12. Radio communication module according to one of the preceding claims, **characterised in that** its design is such that a channel with a minimal channel occupation can be found and a change to such a channel can be triggered.

13. Radio communication module according to one of the preceding claims, **characterised in that** its design is such that a contactless programming can be enabled following its integration into the relevant domestic appliance (HG).

14. Radio communication module according to claim 13, **characterised in that** a contactless programming can be embodied as a safety-relevant, proprietary near-field communication.

15. Domestic appliance **characterised in that** it has a radio communication module (FM) according to one of claims 1 to 14.

## Revendications

1. Module radio pour un appareil ménager interconnecté, dont le standard radio est adaptable, sachant qu'il est prévu que le module radio (FM), pour obtenir différentes bandes de fréquence, différents procédés de modulation ainsi que différents codages, présente un bloc numérique de traitement de signal (DI) sur la base d'un ordinateur librement programmable ainsi qu'un bloc analogique de traitement de signal (AN) pour la commande au moins d'une antenne d'émission et de réception (AT1, AT2, ..., ATn), le bloc (AN) pour la commande au moins d'une antenne d'émission et de réception (AT1, AT2, ..., ATn) étant en outre réalisé de manière à ce qu'une adaptation d'antenne active aux données locales soit réalisable, et un couplage du bloc numérique de traitement de signal au bloc analogique de traitement de signal étant réalisé par un bloc convertisseur (WA) avec conversion numérique-analogique resp. analogique-numérique.

2. Module radio selon la revendication 1, **caractérisé en ce que** ses caractéristiques techniques, comme le fonctionnement conforme à l'emploi prévu avec une bande de fréquence déterminée, avec un procédé de modulation correspondant, avec un codage correspondant, sont réalisées par mise en mémoire de données, qui résultent en tout en un programme de déroulement technique, dans une mémoire (SP) du bloc numérique de traitement de signal (DI).

3. Module radio selon l'une quelconque des revendications précédentes, **caractérisé en ce que** les bandes de fréquence : 315 MHz, 433MHz, 780 MHz, 868 MHz, 915 MHz, 2,4 GHz sont ménagées comme bandes de fréquence avec des tolérances correspondantes en ce qui concerne la fréquence indiquée.

4. Module radio selon l'une quelconque des revendications précédentes, **caractérisé en ce que** les procédés de modulation suivants : AM, BPSK, DSSS, FHSS, FM, FSK, OFDM, QPSK sont ménagés comme procédés de modulation.

5. Module radio selon l'une quelconque des revendications précédentes, **caractérisé en ce que** les procédés de codage suivants : AES, DES, 3DES, WEP, WPA, WPA 2 sont ménagés en tant que codages.

6. Module radio selon l'une quelconque des revendications précédentes, **caractérisé en ce que** le module radio (FM) est réalisé pour la présence d'un réseau radio (FN) qui correspond au standard Long Terme Evolution, LTE en abrégé.

7. Module radio selon l'une quelconque des revendications 1 à 5, **caractérisé en ce que** le module radio (FM) est réalisé pour la présence d'un réseau radio qui correspond au standard Bluetooth, W-LAN suivant IEEE 802.11 b/g/n, LTE, ZigBee ou Z-Wave, et **en ce qu'**il est possible de prévoir qu'une commutatibilité soit présente entre ces standards.

8. Module radio selon l'une quelconque des revendications précédentes, **caractérisé en ce qu'**en plus, le codage de canaux individuels est réalisé au moyen de SSH, SSL, VPN ou IPSec.

9. Module radio selon l'une quelconque des revendications précédentes, **caractérisé en ce que** des adaptateurs actifs (ATG1, ATG2, ... ATGn) sont ménagés pour une commande d'un dispositif multiple d'antennes (AT1, AT2, ...ATn).

10. Module radio selon la revendication 9 **caractérisé en ce qu'**une adaptation d'antenne active (SKT) est réalisée par des adaptateurs électriques (APA) et des filtres adaptatifs analogiques (AF).

11. Module radio selon l'une quelconque des revendications précédentes, **caractérisé en ce que** sa conception est réalisée de manière à ce que la technologie radio correcte du réseau radio du foyer dans lequel l'appareil ménager (HG) muni du module radio (FM) se trouve soit identifiée automatiquement.

12. Module radio selon l'une quelconque des revendications précédentes, **caractérisé en ce que** sa conception est réalisée de manière à ce qu'un canal à moindre affectation de canal soit détectable et **en ce qu'**un changement sur un tel canal puisse être déclenché.

13. Module radio selon l'une quelconque des revendications précédentes, **caractérisé en ce que** sa conception est réalisée de manière à ce qu'après son montage dans l'appareil ménager concerné (HG), une programmation sans contact soit rendue possible.

14. Module radio selon la revendication 13, **caractérisé en ce qu'**une programmation sans contact peut être formée en tant que communication de champ proche propriétaire, importante du point du vue sécurité.

15. Appareil ménager, **caractérisé en ce qu'**il présente un module radio (FM) selon l'une quelconque des revendications 1 à 14.
